# EUROPÄISCHE PATENTSCHRIFT

(11) **EP 3 620 094 B1**
(45) Veröffentlichungstag und Bekanntmachung des Hinweises auf die Patenterteilung: **07.06.2023**
(21) Anmeldenummer: 19188848.6
(22) Anmeldetag: 29.07.2019
(51) Int. Cl.: A47L 9/28

(54) **STAUBSAUGER**
VACUUM CLEANER
ASPIRATEUR

(30) Priorität: 22.08.2018 DE 102018214149
(43) Veröffentlichungstag der Anmeldung: 11.03.2020
(73) Patentinhaber: BSH Hausgeräte GmbH, 81739 München (DE)
(72) Erfinder: Fromm, Christian, 97616 Bad Neustadt (DE); Gökce, Ali Utku, 97616 Salz (DE); Greibl, Michael, 97653 Bischofsheim (DE); Ott, Valeria, 97616 Bad Neustadt (DE)

(56) Entgegenhaltungen:
- EP-A1- 1 260 170
- EP-A1- 3 476 267
- EP-A2- 1 806 831
- WO-A1-2015/077588

## Beschreibung

Die Erfindung betrifft ein handgeführtes elektrisches Werkzeug, wie zum Beispiel einen Schlagbohrschrauber, eine Stichsäge, einen Multi-Cutter, eine Heckenschere oder einen Freischneider, insbesondere einen Staubsauger, das zum Betrieb mit einem Ladungsspeicher ausgelegt ist, wobei die maximale Leistung des Werkzeugs regelbar ist. Die Patentschrift EP 2 215 947 B1 betrifft einen akkubetriebenen Handstaubsauger mit einem Staubsaugerkörper und einem Batteriepack als Energiequelle und enthält eine Lithiumionenbatterie. Das Batteriepack kann an dem Staubsaugerkörper angebracht und von diesem entfernt werden. Hier wird durch eine größere Kapazität der Batterien eine größere maximale Saugzeit erreicht.

Ein weiteres Beispiel eines Handstaubsaugers mit einem von einer Leistungsregeleinheit geregelten Ladungsspeicher ist aus der EP 1 260 170 A1 bekannt.

Aufgabe der vorliegenden Erfindung war es, ein elektrisches Handwerkzeug zur Verfügung zu stellen, dessen Handhabung bequemer gestaltet und dessen Einsatz flexibler ist.

Diese Aufgabe wird durch ein elektrisches Handwerkzeug gemäß Hauptanspruch und einen dazugehörigen Ladungsspeicher sowie ein entsprechendes Werkzeugsystem gemäß den Nebenansprüchen gelöst.

Auch wenn die Erfindung allgemein ein elektrisches Handwerkzeug betrifft, wie beispielsweise unterschiedliche Arten von Bohrern und Schraubern, von Sägen, Scheren, Hobeln, Fräsen, Schleifern und dergleichen, wird die Erfindung im Folgenden am Beispiel eines Staubsaugers erläutert, ohne die übrigen Handwerkzeuge auszuschließen.

Ein erfindungsgemäßer Staubsauger umfasst ein Gehäuse, einen Elektromotor und eine Aufnahmeeinheit zur Aufnahme eines Ladungsspeichers für die Versorgung des Elektromotors mit elektrischer Energie. Der Elektromotor und die Aufnahmeeinheit sind in dem Gehäuse untergebracht, wobei geeignete Elektromotoren und Aufnahmeeinheiten dem Fachmann bekannt sind. Die Aufnahmeeinheit ist dazu ausgestaltet, dass ein bedienerseitig manuell entnehmbarer Ladungsspeicher im angedockten Zustand den Elektromotor mit Energie versorgen kann.

Die Aufnahmeeinheit ist zur Aufnahme eines Ladungsspeichers ausgelegt, so dass er bevorzugt ohne Zuhilfenahme von zusätzlichen Werkzeugen, besonders bevorzugt nur mit einer Hand, von einem Bediener entnommen und ausgetauscht werden kann. Die Aufnahmeeinheit ist beispielsweise als besondere Ausformung des Gehäuses zusammen mit mindestens zwei elektrischen Anschlüssen bzw. Kontaktpunkten ausgestaltet.

Der Ladungsspeicher muss nicht zum Staubsauger gehören. Er ist auf jeden Fall auswechselbar, kann also auf einfache Weise, insbesondere ohne Werkzeug (s. o.), entnommen und durch einen anderen Ladungsspeicher ersetzt werden. Der Begriff "Ladungsspeicher" umfasst die Begriffe Akkumulator bzw. "Akku", Batterie oder auch Kondensator. Ein bevorzugter Akkumulator ist auf Basis von Li-Polymer ("Lithiumakku"), NiMh ("Nickel-Metallhydrid-Akku") oder Pb ("Bleiakku") ausgeführt. Oftmals umfassen Ladungsspeicher abgeschlossene Ladungsspeicher-Zellen oder Ladungsspeicher-Lagen, die alle dieselbe Spannung und/oder dieselbe Kapazität aufweisen und in einer Reihenschaltung und/oder Parallelschaltung miteinander verschaltet sind. Eine Parallelschaltung erhöht die Kapazität, eine Reihenschaltung erhöht die Spannung des Ladungsspeichers.

Bei einer "Reihe von Ladungsspeichern" oder "Akkureihe" weisen Ladungsspeicher unterschiedlicher Kapazität identische oder ähnliche Kontaktstellen für eine Aufnahmeeinheit auf. Sie können also alle in einer einzigen Aufnahmeeinheit eingesetzt werden. Da der Staubsauger stets mit derselben Betriebsspannung läuft, ist die Spannung der Ladungsspeicher einer Reihe also stets gleich und es unterscheiden sich bevorzugt nur die Kapazitäten bzw. die maximale Leistungsabgabe. Beispielsweise können Akkus einer Akkureihe je nach Bedarf an Kapazität ein-, zwei- oder dreilagig mit Ladungsspeicher-Lagen bzw. mit unterschiedlichen Anzahlen parallelgeschalteter Zellen ausgeführt sein. Je nach der technischen Spezifikation der verwendeten Lagen bzw. Zellen können die Ladungsspeicher auch bei gleicher Anzahl an Lagen bzw. Zellen unterschiedliche Kapazitäten aufweisen. Es können z. B. zweilagige Akkus mit 4 Ah oder 6 Ah und einlagige Akkus mit 2 Ah oder 3 Ah ausgeführt sein.

Die Erfindung ist dadurch gekennzeichnet, dass das Handwerkzeug, beispielhaft der Staubsauger, eine Leistungs-Regeleinheit umfasst, die dazu ausgelegt ist, die maximale Leistung des Elektromotors in Abhängigkeit von einem an der Aufnahmeeinheit angeschlossenen Ladungsspeicher, insbesondere einer Reihe von Ladungsspeichern, zu regeln, wobei eine Steuerung des Elektromotors mit dem Wort "regeln" mit umfasst wird. Der Staubsauger "erkennt" also den angeschlossenen Ladungsspeicher und regelt die maximale Leistung des Elektromotors je nach den Eigenschaften des angeschlossenen Ladungsspeichers, z. B. dessen maximale Leistungsabgabe oder dessen Kapazität. Da die Ladungsspeicher einer Reihe, also diejenigen unterschiedlichen Ladungsspeicher, die bestimmungsgemäß von derselben Aufnahmeeinheit aufgenommen werden können, in der Regel alle dieselbe Spannung haben, ist die Regelung der maximalen Leistung des Elektromotors von der Spannung des Ladungsspeichers unabhängig. Es regelt also die Leistungs-Regeleinheit die maximale Leistung des Elektromotors unabhängig von der Spannung des Ladungsspeichers.

Die Erfindung bietet daher den Vorteil, eine Anpassung der maximalen Leistung des Handwerkzeugs ohne weiteres Zutun des Bedieners allein nach den Möglichkeiten des jeweils angeschlossenen Akkus zu erhalten. Damit kann z. B. bei Verwendung größerer, leistungsfähigerer Akkus eine Steigerung der Saugleistung eines Staubsaugers erreicht werden, welche eine ggf. erschwerte Handhabung aufgrund des höheren Gewichts der Akkus wieder aufwiegt, weil sich eine effektivere Reinigung in kürzerer Zeit erreichen lässt.

Ein bevorzugter Staubsauger umfasst eine Gebläse-Einheit zur Erzeugung eines Saugluftstroms und/oder ein elektrisches Vorsatzgerät, bevorzugt eine elektrisch angetriebene Bürste und/oder eine Nassreinigungseinheit und/oder eine Pumpe, wobei die Gebläse-Einheit und/oder das elektrische Vorsatzgerät von dem Elektromotor angetrieben werden. Der Staubsauger, insbesondere das Vorsatzgerät, kann auch einen sonstigen elektrischen Verbraucher, umfassen wie z. B. eine Lampe, dessen maximale Leistung bevorzugt ebenfalls von der Leistungs-Regeleinheit geregelt wird.

Die Leistungs-Regeleinheit ist bevorzugt zur Regelung des Elektromotors mittels einer Pulsweitenmodulation ("PWM") und/oder mittels eines Thyristors ausgelegt. Bevorzugt wird die Leistung des Elektromotors über das Tastverhältnis der Pulsweitenmodulation oder die Gate-Spannung des Thyristors in Abhängigkeit des angeschlossenen Ladungsspeichers gesteuert. Beispielsweise gibt die Leistungs-Steuereinheit ein PWM-Signal an den Elektromotor der Motor-Gebläse-Einheit aus, über das der Elektromotor angetrieben wird. Das Tastverhältnis des PWM-Signals bestimmt dann die maximale Leistung des Staubsaugers. Das Tastverhältnis wird basierend auf der ermittelten maximalen Leistungsabgabe ermittelt. Bei einem Thyristor gibt die Leistungs-Steuereinheit eine Gate-Spannung aus, über das der Elektromotor mittels des Thyristors angetrieben wird. Die Höhe der Gate-Spannung bestimmt dann die maximale Leistung des Staubsaugers. Die Gate-Spannung wird basierend auf der ermittelten maximalen Leistungsabgabe ermittelt. Bevorzugt ist die Spannung des PWM-Signals bzw. die Spannung zwischen Anode und Kathode des Thyristors bei allen verwendeten (bestimmungsgemäßen) Ladungsspeichers gleich, insbesondere selbst wenn die Ladungsspeicher unterschiedliche Spannungen haben sollten.

Bei Anschluss eines vergleichsweise "schwachen" Ladungsspeichers einer Reihe wird selbst bei maximal angewählter Saugleistung nicht das volle Tastverhältnis (100 %) eines PWM-Signals an den Elektromotor gegeben bzw. nicht die maximal mögliche Gate-Spannung an den Thyristor angelegt, weil die durch die Leistungs-Regeleinheit geregelte maximale Leistung des Elektromotors niedriger liegt als die theoretisch erreichbare maximale Leistung. Bei Anschluss eines vergleichsweise "starken" Ladungsspeichers einer Reihe wird bei maximal angewählter Saugleistung dann auch das volle Tastverhältnis eines PWM-Signals an den Elektromotor gegeben bzw. die maximal mögliche Gate-Spannung an den Thyristor angelegt, weil die durch die Leistungs-Regeleinheit geregelte maximale Leistung des Elektromotors nun auch der theoretisch erreichbaren maximalen Leistung entsprechen kann. Wie vorangehend gesagt, ist die Leistungs-Regeleinheit bevorzugt zu einer Regelung der maximalen Leistung des Elektromotors unabhängig von der Spannung eines an die Aufnahmeeinheit angeschlossenen Ladungsspeichers ausgelegt.

Bevorzugt umfasst der Staubsauger eine Erkennungseinheit, insbesondere im Bereich der Aufnahmeeinheit, wobei eine Positionierung der Erkennungseinheit im Grunde von der Art der Erkennung abhängt. Die Erkennungseinheit ist dazu ausgelegt, eine elektrische Eigenschaft, eine Kenngröße oder eine Kodierung, insbesondere eine optische Markierung oder ein elektrisches Datensignal, eines Ladungsspeichers zu erfassen. Dies geschieht bevorzugt mittels eines Sensors. Soll eine optische Markierung (z. B. ein Barcode) erkannt werden, umfasst die Erkennungseinheit bevorzugt eine Kamera, die den Bereich vor der Aufnahmeeinheit bildlich aufnimmt, an der sich bei eingesetztem Ladungsspeicher bestimmungsgemäß die optische Markierung auf dem Ladungsspeicher befindet. Soll ein elektrisches Datensignal oder eine elektrische Eigenschaft des Ladungsspeichers erkannt werden, genügen im Grunde elektrische Kontaktstellen an der Aufnahmeeinheit, z. B. eine Datenschnittstelle mit Kontakten. Die Kontaktstellen können über Kabel mit der Erkennungseinheit verbunden sein, die theoretisch an beliebiger Position im Staubsauger angeordnet ist. Es gibt auch die Möglichkeit, dass die Ladungsspeicher an ihrer Oberfläche eine bestimmte räumliche Ausformung aufweisen, z. B. Einbuchtungen oder Ausstülpungen, deren Anordnung eine Kodierung darstellt. Die Erkennungseinheit kann in diesem Fall auch eine Anzahl von Tastern umfassen, die dort angeordnet sind, wo sich im eingesetzten Zustand des Ladungsspeichers in der Aufnahmeeinheit die bestimmte räumliche Ausformung aufweist.

Bevorzugt ist die Erkennungseinheit dazu ausgestaltet, den Typ und/oder die Kapazität und/oder die maximale Leistungsabgabe eines angeschlossenen Ladungsspeichers zu ermitteln. Der Typ kann über eine individuelle Kodierung des Ladungsspeichers erkannt werden und davon dann die Kapazität und/oder die maximale Leistungsabgabe abgeleitet werden. Die Kapazität oder maximale Leistungsabgabe kann aber theoretisch auch aufgrund einer Entladekurve des Ladungsspeichers bestimmt werden, wobei die Entladeeinheit die Spannung und den Strom des Ladungsspeichers bei verschiedenen Lasten misst.

Generell ist die Erkennungseinheit also im Hinblick auf die vorgenannten Ausführungsformen dazu ausgelegt, unabhängig von einer etwaigen aktiven Datenkommunikation seitens des Ladungsspeichers diesen zu erkennen. Die Erkennung erfolgt also nicht aktiv, nämlich durch besagte Datenkommunikation. Sie erfolgt vielmehr passiv, weil der Ladungsspeicher keine Informationen aktiv sendet. Die Erkennungseinheit ist vielmehr dazu ausgelegt, den Typ bzw. die Kapazität bzw. die maximale Leistungsabgabe eines angeschlossenen Ladungsspeichers ohne dessen aktives Zutun zu erkennen. Die bevorzugte Erkennungseinheit macht das Handwerkszeug also unabhängig von einer aktiven Datenkommunikation zwischen ihm und dem Ladungsspeicher. Dies hat den Vorteil, dass auch Ladungsspeicher ohne eine aufwändige Kommunikationselektronik verwendet werden können und zur Erkennung eines angeschlossenen Ladungsspeichers nur eine Erkennungseinheit im Gerät vorliegen muss.

Was die Ermittlung des Ladungsspeicher-Typs, die davon abgeleitete Ermittlung der Kapazität und/oder der maximalen Leistungsabgabe betrifft, umfasst der Staubsauger bevorzugt einen Datenspeicher mit Daten zu einer vorgegebenen Liste von Typen einer Reihe von Ladungsspeichern. Die Erkennungseinheit ist in diesem Fall dazu ausgestaltet, den Typ und/oder die Kapazität und/oder die maximale Leistungsabgabe eines angeschlossenen Ladungsspeichers basierend auf der vorgegebenen Liste in Verbindung mit der Kodierung eines angeschlossenen Ladungsspeichers zu ermitteln. Beispielsweise wird ein Barcode eines an der Aufnahmeeinheit eingesetzten Ladungsspeichers von einer kleinen Kamera aufgenommen und der Barcode mit Codes der im Staubsauger abgespeicherten Liste verglichen. In der Liste ist z. B. eine Reihe von maximalen Leistungsabgaben mit unterschiedlichen Codes verknüpft. Aufgrund des ermittelten Barcodes wird dann die passende, nämlich die mit diesem Code verknüpfte maximale Leistungsabgabe ausgewählt.

Bevorzugt umfasst der Staubsauger zusätzlich eine Wahleinheit, die zu einer manuellen Einstellung der maximalen Leistung des Elektromotors ausgelegt ist. Die Leistungs-Regeleinheit ist in diesem Fall dazu ausgelegt, die maximale Leistung des Elektromotors in Abhängigkeit von einem an der Aufnahmeeinheit angeschlossenen Ladungsspeicher und der Einstellung der Wahleinheit zu regeln. Wenn durch einen Ladungsspeicher z. B. die maximale Leistungsabgabe vorgegeben ist, wird der Elektromotor erst mit der maximalen Leistung betrieben, wenn auch die Wahleinheit in einer entsprechenden Position steht.

Bevorzugt ist die Leistungs-Regeleinheit dazu ausgelegt, den Elektromotor, insbesondere die maximale Saugleistung des Staubsaugers, in Abhängigkeit einer ermittelten Kapazität oder maximalen Leistungsabgabe eines Ladungsspeichers zu regeln. Der durch die Leistungs-Regeleinheit geregelte Elektromotor hat also direkt Einfluss auf die Saugleistung, z. B. weil er eine Gebläse-Einheit zur Erzeugung eines Saugluftstroms antreibt.

Ein erfindungsgemäßer Ladungsspeicher ist zum Anschluss an einen erfindungsgemäßen Staubsauger ausgelegt. Er umfasst eine Markierung und/oder eine Kodierung, welche einen eindeutigen Rückschluss auf die Kapazität und/oder die maximale Leistungsabgabe des Ladungsspeichers erlaubt, z. B. einen Barcode. Die Markierung bzw. Kodierung ist dabei bevorzugt genau dort auf dem Ladungsspeicher angebracht, wo sie für eine Erkennungseinheit des Staubsaugers erfassbar ist.

Ein erfindungsgemäßes Staubsaugersystem umfasst einen erfindungsgemäßen Staubsauger und einen erfindungsgemäßen Ladungsspeicher. Der Ladungsspeicher ist besonders bevorzugt Teil einer Reihe von Ladungsspeichern unterschiedlicher Kapazität und/oder unterschiedlicher maximaler Leistungsabgabe, wobei die Ladungsspeicher auswechselbar in einer Aufnahmeeinheit des Staubsaugers angebracht sein können.

Ein erfindungsgemäßes Verfahren zur Regelung eines Staubsaugers umfasst die Schritte:
- Bereitstellung eines erfindungsgemäßen Staubsaugers mit einer Aufnahmeeinheit zur Aufnahme eines Ladungsspeichers und einem Elektromotor,
- Anschluss eines (erfindungsgemäßen) Ladungsspeichers an die Aufnahmeeinheit,
- Erkennung des Typs des angeschlossenen Ladungsspeichers,
- Regelung der maximalen Leistung des Elektromotors in Abhängigkeit von dem angeschlossenen Ladungsspeicher.

Wird also ein Ladungsspeicher mit geringerer Kapazität angeschlossen und erkannt, wird die maximale Leistung des Elektromotors auf ein bestimmtes (geringeres) Niveau eingestellt. Wird ein Ladungsspeicher mit höherer Kapazität angeschlossen und erkannt, wird die maximale Leistung des Elektromotors auf ein höheres Niveau eingestellt. Da leistungsfähigere Ladungsspeicher zumeist ein höheres Gewicht haben als schwächere, kann der Benutzer somit zwischen einer kleinen, leichten, günstigeren aber nicht so leistungsstarken Konfiguration oder einer etwas größeren, schwereren, teureren und leistungsstärkeren Konfiguration wählen.

Vorteil der Erfindung ist, dass in Abhängigkeit von einem an einem Staubsauger verwendeten Ladungsspeicher von dem Staubsauger automatisch unterschiedliche Leistungsstufen für eine Motor-Gebläse-Einheit ausgewählt werden können. Damit kann ein Benutzer unterschiedliche Typen von wechselbaren Ladungsspeichern verwenden, um statt der Standzeit nun die Saugleistung eines Staubsaugers zu beeinflussen. Es ergibt sich eine Erhöhung der Flexibilität des Einsatzes des Staubsaugers, indem die Aufnahmeleistung des Gerätes auf Basis einer Akkuerkennung verändert bzw. angepasst wird. Das Gerät erkennt automatisch, ob technisch unterschiedliche Ladungsspeicher am Gerät angeschlossen sind und ändert dann die Aufnahmeleistung.

Das Prinzip der Erfindung wird im Folgenden anhand einer Zeichnung beispielshalber noch näher erläutert. In der Zeichnung zeigen:
Figur 1: einen schematischen Aufbau eines erfindungsgemäßen Staubsaugersystems,
Figur 2: zwei bevorzugte Ladungsspeicher für einen Staubsauger,
Figur 3: Schaubilder für unterschiedliche Leistungsabgaben von Ladungsspeichern.

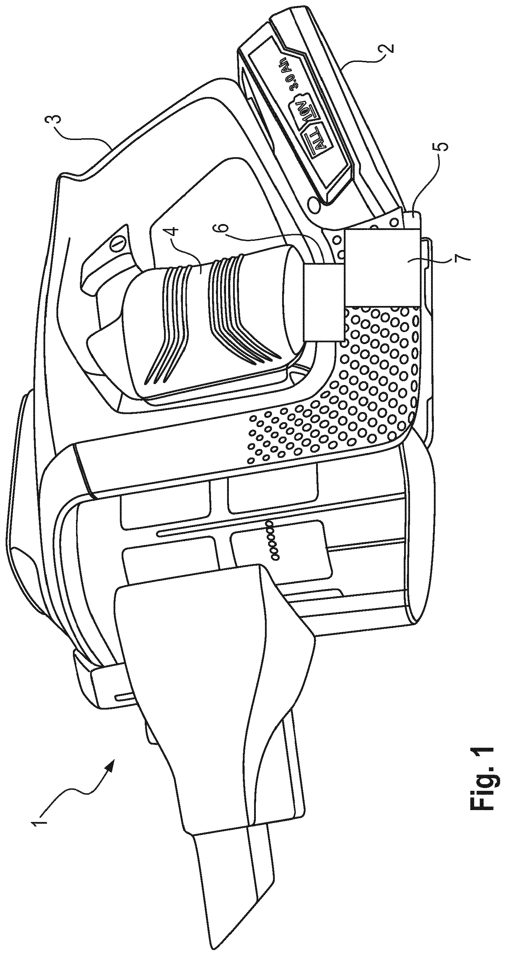

Figur 1 zeigt einen schematischen Aufbau eines Staubsaugersystems aus einem Staubsauger 1 und einem Ladungsspeicher 2 in Form eines Akkus. Im Gehäuse 3 des Staubsaugers 1 ist ein Elektromotor 4 untergebracht. An der hinteren Unterseite des Gehäuses 3 ist eine Aufnahmeeinheit 5 zur Aufnahme des Ladungsspeichers 2 angeordnet, der dort mechanisch und elektrisch angeschlossen ist, um den Elektromotor 4 mit Energie zu versorgen. Der Staubsauger 1 umfasst eine symbolisch dargestellte Leistungs-Regeleinheit 6, die dazu ausgelegt ist, die maximale Leistung des Elektromotors 4 in Abhängigkeit von einem an der Aufnahmeeinheit 5 angeschlossenen Ladungsspeichers 2 zu regeln. Darüber hinaus umfasst der Staubsauger 1 in der Nähe der Aufnahmeeinheit 5 eine ebenfalls symbolisch dargestellte Erkennungseinheit 7, die dazu ausgelegt ist, den Typ eines angeschlossenen Ladungsspeichers 2 zu ermitteln. Aus einer vorgegebenen Liste von Typen einer Reihe von zugehörigen Ladungsspeichern 2, die in einem Datenspeicher des Staubsaugers 1 vorhanden ist, kann nach Erkennung eines Ladungsspeicher-Typs durch die Erkennungseinheit 7 dessen Kapazität bzw. seine maximale Leistung ermittelt werden. Z. B. wird ein Ladungsspeicher 2 eines bestimmten Typs einer Ladungsspeicher-Reihe erkannt. In der Liste finden sich dessen technischen Daten, zumindest die Kapazität und/oder die Leistung, die maximal abgegeben werden kann.

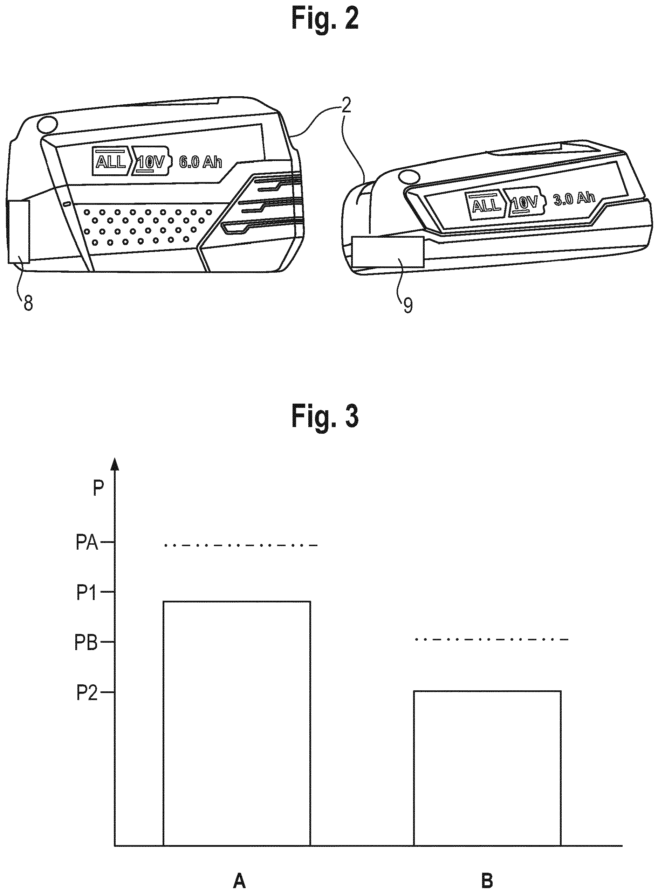

Figur 2 zeigt zwei bevorzugte unterschiedliche Typen von Ladungsspeichern 2 für einen Staubsauger. Die Ladungsspeicher 2 haben unterschiedliche Kapazität und verfügen über individuelle Kodierungen 8, 9. Es sind zwei unterschiedliche Kodierungsmöglichkeiten der beiden Ladungsspeicher 2 dargestellt, die unterschiedliche Erkennungseinheiten 7 benötigen.

Der linke Ladungsspeicher 2, der eine größere Kapazität und eine größere maximale Leistungsabgabe hat, umfasst eine optische Markierung 8, die ein Sensor der Erkennungseinheit 7 (s. Fig. 1), z. B. eine kleine Kamera wie bei einer optischen Maus, erkennen kann. Z. B. ein Barcode als optische Markierung 8 lässt den Typ des Ladungsspeichers 2 erkennen oder liefert direkt Informationen über die maximale Leistungsabgabe. Die Erkennungseinheit 7 ist zweckmäßig in einem Bereich der Aufnahmeeinheit 5 positioniert.

Der rechte Ladungsspeicher 2, der eine kleinere Kapazität und eine kleinere maximale Leistungsabgabe bietet, umfasst eine kleine Recheneinheit 9, die ein elektrisches Datensignal über eine Datenschnittstelle am Ladungsspeicher 2 an die Erkennungseinheit 7 (s. Fig. 1) senden kann. Die gesendeten Daten können Informationen über den Typ des Ladungsspeichers 2 oder Informationen über dessen maximale Leistungsabgabe bereitstellen. Die Erkennungseinheit 7 kann an beliebiger Stelle im Staubsauger 1 positioniert werden. Da lediglich Daten gelesen werden, ist sie nicht auf eine Positionierung in einem Bereich der Aufnahmeeinheit 5 angewiesen, sofern sich dort eine Datenschnittstelle zur Datenverbindung mit der Datenschnittstelle des Ladungsspeichers 2 befindet.

In der Praxis besitzen die beiden Ladungsspeicher 2 entweder die optische Markierung 8 oder die Recheneinheit 9. In besonderen Fällen können sie beide Kodierungsmöglichkeiten umfassen.

In Figur 3 ist in einem Schaubild eine unterschiedliche Leistung P zweier Akkus dargestellt (gestrichelte Linien). Beispielsweise hat ein Akku A eine Kodierung für eine maximale Leistungsabgabe PA an dem Staubsauger und ein Akku B eine Kodierung für eine maximale Leistungsabgabe PB an dem Staubsauger aufweist, wobei die maximale Leistungsabgabe PB kleiner ist als die maximale Leistungsabgabe PA.

Wird nun Akku A an die Aufnahmeeinheit 5 angeschlossen, erkennt der Staubsauger 1, dass ein Akku mit der großen maximalen Leistungsabgabe PA mit dem Staubsauger 1 verbunden ist. Die Leistungs-Regeleinheit 6 regelt daraufhin, dass der Elektromotor 4 mit einer größeren maximalen Leistung P1 betrieben wird.

Wird hingegen Akku B an die Aufnahmeeinheit 5 angeschlossen, erkennt der Staubsauger 1, dass ein Akku mit der kleinen maximalen Leistungsabgabe PB mit dem Staubsauger 1 verbunden ist. Jetzt sorgt die Leistungs-Regeleinheit 6 dafür, dass der Elektromotor 4 wird mit einer kleineren maximalen Leistung P2 betrieben wird.

Da es sich bei der vorhergehenden, detailliert beschriebenen Ausführungsform um ein Beispiel handelt, kann es in üblicher Weise vom Fachmann in einem weiten Umfang modifiziert werden, ohne den Bereich der Erfindung zu verlassen. Grundsätzlich kann nahezu jedes Handwerkzeug erfindungsgemäß weitergebildet werden, das sich mit einem bedienerseitig wechselbaren Akku betreiben lässt. Insbesondere können auch die konkreten Ausgestaltungen des Staubsaugers hinsichtlich der Anordnung seiner Funktionseinheiten in anderer Form als in der hier beschriebenen erfolgen. Weiter schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Staubsauger
- 2: Ladungsspeicher
- 3: Gehäuse
- 4: Elektromotor
- 5: Aufnahmeeinheit
- 6: Leistungs-Regeleinheit
- 7: Erkennungseinheit
- 8: Optische Markierung
- 9: Recheneinheit
- P: Leistung
- PA: maximale Leistungsabgabe des Akkus A
- PB: maximale Leistungsabgabe des Akkus B

## Patentansprüche

1. Handwerkzeug, insbesondere Staubsauger (1), umfassend ein Gehäuse (3), einen Elektromotor (4) und eine Aufnahmeeinheit (5) zur Aufnahme eines Ladungsspeichers (2) für die Versorgung des Elektromotors (4) mit elektrischer Energie, **dadurch gekennzeichnet, dass** das Handwerkzeug (1) eine Leistungs-Regeleinheit (6) umfasst, die dazu ausgelegt ist, die maximale Leistung des Elektromotors (4) in Abhängigkeit von einem an der Aufnahmeeinheit (5) angeschlossenen Ladungsspeicher (2) unabhängig von der Spannung des Ladungsspeichers (2) zu regeln.

2. Handwerkzeug (1) nach Anspruch 1, umfassend eine Gebläse-Einheit zur Erzeugung eines Saugluftstroms und/oder ein elektrisches Vorsatzgerät, bevorzugt eine elektrisch angetriebene Bürste und/oder eine Nassreinigungseinheit und/oder eine Pumpe, wobei die Gebläse-Einheit und/oder das elektrische Vorsatzgerät von dem Elektromotor (4) angetrieben werden.

3. Handwerkzeug (1) nach einem der vorangehenden Ansprüche, **dadurch gekennzeichnet, dass** die Leistungs-Regeleinheit (6) zur Regelung des Elektromotors (4) mittels einer Pulsweitenmodulation und/oder mittels eines Thyristors ausgelegt ist, wobei die Leistungs-Regeleinheit (6) bevorzugt zu einer Regelung der maximalen Leistung des Elektromotors (4) unabhängig von der Spannung eines an die Aufnahmeeinheit (5) angeschlossenen Ladungsspeichers (2) ausgelegt ist.

4. Handwerkzeug (1) nach einem der vorangehenden Ansprüche, **dadurch gekennzeichnet, dass** es, insbesondere im Bereich der Aufnahmeeinheit 5, eine Erkennungseinheit (7) umfasst, die dazu ausgelegt ist, eine elektrische Eigenschaft, eine Kenngröße oder eine Kodierung, insbesondere eine optische Markierung (8) oder ein elektrisches Datensignal eines Ladungsspeichers (2) zu erfassen, bevorzugt mittels eines Sensors.

5. Handwerkzeug (1) nach Anspruch 4, **dadurch gekennzeichnet, dass** die Erkennungseinheit (7) dazu ausgestaltet ist, den Typ und/oder die Kapazität und/oder die maximale Leistungsabgabe eines angeschlossenen Ladungsspeichers (2) zu ermitteln.

6. Handwerkzeug (1) nach Anspruch 4 oder 5, **dadurch gekennzeichnet, dass** das Handwerkzeug (1) einen Datenspeicher mit Daten zu einer vorgegebenen Liste von Typen einer Reihe von Ladungsspeichern (2) umfasst und die Erkennungseinheit (7) dazu ausgestaltet ist, den Typ und/oder die Kapazität und/oder die maximale Leistungsabgabe eines angeschlossenen Ladungsspeichers (2) basierend auf dieser vorgegebenen Liste zu ermitteln.

7. Handwerkzeug (1) nach einem der vorangehenden Ansprüche, **dadurch gekennzeichnet, dass** das Handwerkzeug (1) zusätzlich eine Wahleinheit umfasst, die zu einer manuellen Einstellung der maximalen Leistung des Elektromotors ausgelegt ist und die Leistungs-Regeleinheit (6) dazu ausgelegt ist, die maximale Leistung des Elektromotors (4) in Abhängigkeit von einem an der Aufnahmeeinheit (5) angeschlossenen Ladungsspeicher (2) und der Einstellung der Wahleinheit zu regeln.

8. Handwerkzeug (1) nach einem der vorangehenden Ansprüche, **dadurch gekennzeichnet, dass** die Leistungs-Regeleinheit (6) dazu ausgelegt ist, den Elektromotor (4), insbesondere die maximale Saugleistung des Handwerkzeugs (1), in Abhängigkeit einer ermittelten Kapazität oder maximalen Leistungsabgabe eines Ladungsspeichers (2) zu regeln.

9. Ladungsspeicher (2) des Handwerkzeugs (1) gemäß einem der Ansprüche 1 bis 7, umfassend eine Markierung (8) und/oder eine Kodierung, welche einen eindeutigen Rückschluss auf die Kapazität und/oder die maximale Leistungsabgabe des Ladungsspeichers (2) erlaubt und insbesondere von einer Erkennungseinheit (7) des Handwerkzeugs (1) erfassbar ist.

10. Handwerkzeugsystem umfassend ein Handwerkzeug (1) nach einem der Ansprüche 1 bis 8 und einem Ladungsspeicher (2) nach Anspruch 9.

## Claims

1. Hand tool, in particular vacuum cleaner (1), comprising a housing (3), an electric motor (4) and a receiving unit (5) for receiving a charge storage device (2) for supplying the electric motor (4) with electrical energy, **characterised in that** the hand tool (1) comprises a power-regulating unit (6), which is configured to regulate the maximum power of the electric motor (4) as a function of a charge storage device (2) connected to the receiving unit (5) independent of the voltage of the charge storage device (2).

2. Hand tool according to claim 1, comprising a fan unit for generating a suction airflow and/or an electrical attachment, preferably an electrically driven brush and/or a wet cleaning unit and/or a pump, wherein the fan unit and/or the electrical attachment is/are driven by the electric motor (4).

3. Hand tool (1) according to one of the preceding claims, **characterised in that** the power-regulating unit (6) is configured to regulate the electric motor (4) by means of a pulse width modulation and/or by means of a thyristor, wherein the power-regulating unit (6) is preferably configured to regulate the maximum power of the electric motor (4) independent of the voltage of a charge storage device (2) connected to the receiving unit (5).

4. Hand tool (1) according to one of the preceding claims, **characterised in that** it comprises an identification unit (7), in particular in the region of the receiving unit (5), which identification unit is configured to detect an electrical property, a parameter or an encoding, in particular a visual marking (8) or an electrical data signal of a charge storage device (2), preferably by means of a sensor.

5. Hand tool according to claim 4, **characterised in that** the identification unit (7) is embodied to determine the type and/or the capacity and/or the maximum power output of a connected charge storage device (2).

6. Hand tool (1) according to claim 4 or 5, **characterised in that** the hand tool (1) comprises a data storage unit with data on a predefined list of types from a series of charge storage devices (2) and the identification unit (7) is configured to determine the type and/or the capacity and/or the maximum power output of a connected charge storage unit (2) on the basis of this predefined list.

7. Hand tool (1) according to one of the preceding claims, **characterised in that** the hand tool (1) additionally comprises a selection unit which is configured for manually setting the maximum power of the electric motor and the power-regulating unit (6) is configured to regulate the maximum power of the electric motor (4) as a function of a charge storage device (2) connected to the receiving unit (5) and to regulate the setting of the selection unit.

8. Hand tool (1) according to one of the preceding claims, **characterised in that** the power-regulating unit (6) is configured to regulate the electric motor (4), in particular the maximum suction power of the hand tool (1), as a function of a determined capacity or maximum power output of a charge storage device (2).

9. Charge storage device (2) of the hand tool (1) according to one of claims 1 to 7, comprising a marking (8) and/or an encoding which provides clear indication as to the capacity and/or the maximum power output of the charge storage device (2) and in particular can be detected by an identification unit (7) of the hand tool (1).

10. Hand tool system comprising a hand tool (1) according to one of claims 1 to 8 and a charge storage device (2) according to claim 9.

## Revendications

1. Outil à main, en particulier aspirateur (1), comprenant un boîtier (3), un moteur électrique (4) et une unité réceptrice (5) pour recevoir un accumulateur de charge (2) pour alimenter le moteur électrique (4) avec de l'énergie électrique,
**caractérisé en ce que** l'outil à main (1) comprend un dispositif de régulation de puissance (6), qui est conçu pour réguler la puissance maximale du moteur électrique (4) en fonction d'un accumulateur de charge (2) connecté à l'unité réceptrice (5) indépendamment de la tension de l'accumulateur de charge (2).

2. Outil à main (1) selon la revendication 1, comprenant un ensemble de ventilateur pour générer un flux d'air d'aspiration et/ou un appareil électrique adaptable, en particulier une brosse entraînée électriquement et/ou un dispositif de nettoyage humide et/ou une pompe, dans lequel l'ensemble de ventilateur et/ou l'appareil électrique adaptable sont entraînés par le moteur électrique (4).

3. Outil à main (1) selon l'une des revendications précédentes, **caractérisé en ce que** le dispositif de régulation de puissance (6) est conçu pour réguler le moteur électrique (4) au moyen d'une modulation de largeur d'impulsion et/ou au moyen d'un thyristor, dans lequel le dispositif de régulation de puissance (6) est conçu de préférence pour une régulation de la puissance maximale du moteur électrique (4) indépendamment de la tension d'un accumulateur de charge (2) connecté à l'unité réceptrice (5).

4. Outil à main (1) selon l'une des revendications précédentes, **caractérisé en ce qu'**il comprend, en particulier dans la région de l'unité réceptrice (5), une unité de détection (7), qui est conçue pour détecter une propriété électrique, une grandeur caractéristique ou une codification, en particulier un marquage optique (8) ou un signal électrique de données d'un accumulateur de charge (2), de préférence au moyen d'un capteur.

5. Outil à main (1) selon la revendication 4, **caractérisé en ce que** l'unité de détection (7) est configurée pour déterminer le type et/ou la capacité et/ou la puissance de sortie maximale d'un accumulateur de charge (2) connecté.

6. Outil à main (1) selon la revendication 4 ou 5, **caractérisé en ce que** l'outil à main (1) comprend une mémoire de données comprenant des données d'une liste prédéterminée de types d'une série d'accumulateurs de charge (2) et l'unité de détection (7) est configurée pour déterminer le type et/ou la capacité et/ou la puissance de sortie maximale d'un accumulateur de charge (2) connecté sur la base de cette liste prédéterminée.

7. Outil à main (1) selon l'une des revendications précédentes, **caractérisé en ce que** l'outil à main (1) comprend en outre un dispositif de sélection, qui est conçu pour un réglage manuel de la puissance maximale du moteur électrique et le dispositif de régulation de puissance (6) est conçu pour réguler la puissance maximale du moteur électrique (4) en fonction d'un accumulateur de charge (2) connecté à l'unité réceptrice (5) et du réglage du dispositif de sélection.

8. Outil à main (1) selon l'une des revendications précédentes, **caractérisé en ce que** le dispositif de régulation de puissance (6) est conçu pour réguler le moteur électrique (4), en particulier la puissance d'aspiration maximale de l'outil à main (1), en fonction d'une capacité ou d'une puissance de sortie maximale déterminée d'un accumulateur de charge (2).

9. Accumulateur de charge (2) de l'outil à main (1) selon l'une des revendications 1 à 7, comprenant un marquage (8) et/ou une codification, qui permet de déduire clairement la capacité et/ou la puissance de sortie maximale de l'accumulateur de charge (2) et est détectable en particulier par une unité de détection (7) de l'outil à main (1).

10. Système d'outil à main comprenant un outil à main (1) selon l'une des revendications 1 à 8 et un accumulateur de charge (2) selon la revendication 9.
